# EUROPÄISCHE PATENTSCHRIFT

(11) **EP 4 655 517 B1**
(45) Veröffentlichungstag und Bekanntmachung des Hinweises auf die Patenterteilung: **23.09.2026**
(21) Anmeldenummer: 24701401.2
(22) Anmeldetag: 19.01.2024
(51) Int. Cl.: F16G 13/16

(54) **LEITUNGSFÜHRUNGSVORRICHTUNG MIT EINTEILIGEN LÄNGSABSCHNITTEN UND FÜHRUNGSSTÜCK HIERFÜR**
CABLE ROUTING DEVICE COMPRISING SINGLE-PIECE LONGITUDINAL SECTIONS, AND ROUTING PIECE THEREFOR
DISPOSITIF D'ACHEMINEMENT DE CÂBLE COMPORTANT DES SECTIONS LONGITUDINALES MONOBLOCS, ET ÉLÉMENT D'ACHEMINEMENT POUR CELUI-CI

(30) Priorität: 24.01.2023 DE 202023100342 U
(43) Veröffentlichungstag der Anmeldung: 03.12.2025
(73) Patentinhaber: igus SE & Co. KG, 51147 Köln (DE)
(72) Erfinder: DOMMNIK, Jörg, 51147 Köln (DE)
(74) Vertreter: Lippert Stachow Patentanwälte Rechtsanwälte
(86) Internationale Anmeldenummer: PCT/EP2024/051286
(87) Internationale Veröffentlichungsnummer: WO 2024/156614

(56) Entgegenhaltungen:
- EP-A1- 3 492 791
- DE-A1- 19 837 231
- US-A- 5 411 443
- US-A1- 2009 077 942

## Beschreibung

Die Erfindung betrifft allgemein eine Vorrichtung zum geschützten Führen mindestens einer Leitung, wie z.B. eines Kabels, eines Schlauchs oder dergleichen, zwischen zwei Anschlussstellen von denen mindestens eine beweglich ist, typisch zwischen einem festen und einem beweglichen Anschlusspunkt.

Typischerweise kann eine Leitungsführung mehrere Leitungen aufnehmen. Ein sehr verbreitetes Beispiel ist die sogenannte Energieführungskette. Diese besteht aus einzelnen Gliedern, welche meist aus mehreren Einzelteilen zusammengesetzt sind. Die Patente DE3531066C2, EP0803032B1 bzw. EP1381792B1 der Anmelderin beschreiben solche Energieführungsketten mit Gliedern aus zwei, vier bzw. sechs Einzelteilen. Solche Ketten haben sich sehr bewährt. Sie sind robust und zuverlässig, jedoch aufwändig in der Herstellung bzw. im Zusammenbau. Energieführungsketten sind typisch mit Gelenkverbindungen in Art eines Drehgelenks oder Scharniers zwischen zwei verbundenen Gliedern ausgeführt.

Die vorliegende Erfindung betrifft gattungsgemäß eine Leitungsführungsvorrichtung zum beweglichen Führen mindestens einer Versorgungsleitung, wobei zumindest ein Längsabschnitt der Leitungsführungsvorrichtung mehrere Segmente umfasst und einteilig hergestellt ist und wobei die Segmente durch eine flexible Verbindung in Längsrichtung miteinander verbunden sind, sodass die Segmente zueinander in einer Schwenkebene schwenkbar sind, insbesondere zwecks Bildung eines Umlenkbogens beim Bewegen der Leitungsführungsvorrichtung. Die Segmente definieren einen Aufnahmeraum in den mindestens eine Versorgungsleitung eingelegt werden kann, um im Betrieb darin geführt zu bleiben.

Solche Leitungsführungsvorrichtungen, welche keine eigentlichen Gliederketten darstellen bzw. keine ausgeprägten Drehgelenke aufweisen, werden im Fachgebiet gelegentlich auch als "Bandketten" bezeichnet.

Teilweise oder vollständig einteilig hergestellte "Bandketten" sind z.B. aus US 3,473,769 A, aus EP 0 724 101 A1 aus WO 00/11772 A1 oder auch aus DE 10 2007 038 747 A1 bereits bekannt. Diese Leitungsführungsvorrichtungen werden typisch in Extrusionstechnik hergestellt und müssen anschließend einer Nachbearbeitung, insbesondere trennenden Nachbearbeitung zur Erzeugung einzelner Segmente, unterzogen werden. Dies ist relativ aufwändig und Anpassungen bei der Formgebung, z.B. zur Veränderung des Radius bzw. minimalen Schwenkwinkels, nicht ohne weiteres möglich.

Geometriebedingt schwieriger ist hingegen die Herstellung solcher, meist zumindest abschnittsweise, einteiliger Leitungsführungsvorrichtungen im Spritzgussverfahren. Ein Ansatz hierzu wurde in WO 98/40645 A1 vorgeschlagen. Hierbei wird als Segment ein faltbares Schutzelement aus Kunststoff im Wesentlichen in einer etwa ebenen, flächigen Konfiguration einteilig im Spritzguss hergestellt. Das Segment hat verbiegbare Brücken, um einzelne Bereich des Segments durch Falten zu einem Glied umzuformen, das einen umfänglich geschlossenen Aufnahmeraum definiert. Auch dies erfordert aufwändige Nachbearbeitung, typisch von Hand, zur Herstellung einer gebrauchsfertigen Leitungsführungsvorrichtung.

Ein anderer Ansatz wurde in DE 198 60 948 A1 von der Anmelderin vorgeschlagen. Hierin werden einzelne Segmente ein- oder mehrteilig im Spritzguss hergestellt, ähnlich wie konventionelle Glieder, und anschließend auf ein biegsames Gleitband aufgesteckt.

Eine Aufgabe der vorliegenden Erfindung liegt mithin darin, eine Gestaltung vorzugschlagen, welche die Herstellung einteiliger Abschnitte im Kunststoff-Spritzgussverfahren ermöglicht und insbesondere die Herstellung gebrauchsfertiger Bestandteile der Leitungsführungsvorrichtung, d.h. von Bestandteilen die keiner Nachbearbeitung bedürfen, vereinfacht.

Dies wird erreicht mittels einer Leitungsführungsvorrichtung nach Anspruch 1 bzw. eines einteiligen Stückes einer gattungsgemäßen Leitungsführungsvorrichtung nach Anspruch 15.

Vorgeschlagen wird eine Leitungsführungsvorrichtung zum beweglichen Führen mindestens einer Versorgungsleitung, wie zum Beispiel eines Strom- oder Datenkabels, zwischen zwei Anschlussstellen, von denen mindestens eine relativbeweglich zur anderen ist, wobei zumindest ein Längsabschnitt der Leitungsführungsvorrichtung mehrere Segmente umfasst und einteilig hergestellt ist. Dabei können die Segmente durch eine flexible Verbindung in Längsrichtung miteinander verbunden sein, sodass die Segmente zueinander in einer Schwenkebene schwenkbar sind, insbesondere zwecks Bildung eines Umlenkbogens beim Bewegen der Leitungsführungsvorrichtung. Die Segmente definieren typisch mindestens einen Aufnahmeraum, in welchen mindestens eine Versorgungsleitung eingelegt werden kann, um im Betrieb darin geführt bzw. gehalten zu werden.

Erfindungsgemäß wird im Kern vorgeschlagen, dass die Segmente jeweils einen Zentralbereich mit einer Hauptebene, welcher senkrecht zur Schwenkebene verläuft, aufweisen und die Segmente mit an einer ersten Seite der Hauptebene einem ersten Aufnahmeraum und an einer gegenüberliegenden zweiten Seite der Hauptebene einem zweiten Aufnahmeraum ausgeführt sind. Bereits durch diese Gestaltung mit beidseitigen Aufnahmeräumen wird erreicht, dass der Zentralbereich als im Formwerkzeug parallel zur Schließ- bzw. Entformrichtung bzw. vertikal. ausgerichteter Bereich herstellbar wird. Dies bewirkt erhebliche Vereinfachung, da das Entformen spürbar vereinfacht werden kann bzw. eine Herstellung in einfacheren Werkzeugen (sog. Auf-/Zu-Werkzeuge ohne Schieber) ermöglicht wird.

Insbesondere wird der erste Aufnahmeraum dabei durch einen ersten Steg quer zur Hauptebene und ein von diesem Steg gehaltenes erstes Seitenteil und eine erste Hauptfläche des Zentralbereich begrenzt. Analog liegt der an der gegenüberliegenden zweiten Seite der Hauptebene der zweite Aufnahmeraum, welcher durch einen zweiten Steg quer zur Hauptebene und ein von diesem Steg gehaltenes zweites Seitenteil und eine zweite Hauptfläche des Zentralbereichs begrenzt ist. Diese Geometrie erlaubt eine vereinfachte und gebrauchsfertige Herstellung im bevorzugten Spritzgussverfahren, bei welcher alle wesentlichen Bereiche eines Segments auf einfache Weise einteilig hergestellt werden können.

Erfindungsgemäß wird dabei insbesondere vorgeschlagen, dass jeweils der erste und zweite Steg sowie das erste und zweite Seitenteil einteilig mit dem Zentralbereich hergestellt sind und zugleich mindestens ein biegsamer Gelenkbereich einteilig mit den Zentralbereichen von je zwei in Längsrichtung aufeinanderfolgenden Segmenten hergestellt ist, um die flexible Verbindung dazwischen bereitzustellen. Somit können alle wesentlichen Strukturbereiche des Längsabschnitts als einteiliges Kunststoffteil hergestellt werden.

Die vorgeschlagene Gestaltung legt die dem Steg gegenüberliegende, typische offene Seite zum einlegen bzw. entnehmen von Leitungen so, dass die Leitungen in etwa in Richtung senkrecht zur Verschwenkebene eingelegt bzw. entnommen werden. Dies vermeidet ein ungewolltes Austreten der Leitung im Betrieb. Durch die vorgeschlagene Gestaltung sind die Segmente so gestaltet, dass Reaktionskräfte der Leitungen beim Verfahren im Umlenkbogen radial nach Außen bzw. radial nach Innen entweder auf den Zentralbereich oder auf ein Seitenteil wirken, nicht jedoch in Richtung des Stegs bzw. der typisch dem Steg gegenüberliegenden Einführöffnung.

Die vorgeschlagene Gestaltung mit beidseitig zu den Zentralbereichen vorgesehenen Aufnahmebereichen kann je nach Ausrichtung auch den Vorteil bieten, dass die Gewichtslast freitragender Bereiche parallel zur Hauptebene auf die Zentralbereiche bzw. biegsamen Gelenkbereiche wirkt und diese Bereiche somit in Art eines Stegs eines Trägers, d.h. kann bei vergleichsweise geringer Wandstärke bereits hohe Tragwirkung erzielen können. Dabei können die Zentralbereiche bzw. die biegsamen Gelenkbereiche Abmessung in Richtung senkrecht zur Verschwenkebene haben, welche einen zumindest überwiegenden Anteil der entsprechenden Abmessung der Aufnahmeräume beträgt, bevorzugt mindestens 80%, z.B. 100% dieser Abmessung der Aufnahmeräume.

Die erfindungsgemäße Leitungsführungsvorrichtung hat keine ausgeprägten Drehgelenkverbindungen und benötigt insbesondere auch kein separates Gleit- bzw. Verbindungsband zur biegsamen Verbindung der Glieder.

Zur bestimmungsgemäßen Begrenzung des Verschwenkwinkels der zueinander schwenkbaren Segmente ist vorzugsweise vorgesehen, dass voneinander abgewandte, in Längsrichtung weisende und/oder quer zur Schwenkebene verlaufende Stirnseiten von zumindest einem der ersten und zweiten Seitenteile jeweils als Anschläge zur Verschwenkwinkelbegrenzung zusammenwirken. Hierbei können insbesondere entsprechende erste Stirnseiten der ersten Seitenteile den Verschwenkwinkel einerseits bzw. in dem einen Drehsinn in Strecklage begrenzen und/oder entsprechende zweite Stirnseiten der zweiten Seitenteile den Verschwenkwinkel andererseits bzw. in dem anderen Drehsinn, z.B. in maximal abgewinkelter Relativlage bei Bildung des Umlenkbogens, begrenzen. Bevorzugt sind zumindest einige einteilige Längsabschnitte gegenüber einer geraden Strecklage, z.B. zur Bildung eines gestreckten Trums, nur in einem Drehsinn zur Bildung des Umlenkbogens schwenkbar. Insbesondere hierzu kann bevorzugt vorgesehen sein, dass die ersten und zweiten Seitenteile in Längsrichtung unterschiedliche Längen aufweisen, um verschiedene Anschlagwirkung zu erzielen und die Verschwenkwinkel unterschiedlich zu begrenzen. Die vorgeschlagene Gestaltung kann jedoch auch für Leitungsführungseinrichtungen mit rückwärtiger Biegung (entgegen dem Umlenkbogen) vorteilhaft genutzt werden.

Zum besseren Halten der Leitungen ist an mindestens einem der Seitenteile ein Rückhaltebereich, insbesondere gegenüberliegend zum Steg ein zum Zentralbereich vorstehender Rückhaltebereich, zum Halten der Leitung im jeweiligen Aufnahmeraum vorgesehen. Der Rückhaltebereich kann dabei durch ein separat hergestelltes Rückhalteelement gebildet werden, das an das Segment montiert wird. Besonders bevorzugt ist hingegen der Rückhaltebereich einteilig mit dem Seitenteil, insbesondere einteilig mit dem Seitenteil, Steg und Zentralbereich, hergestellt. Dies kann bevorzugt erzielt werden, indem im Steg eine Ausformungsaussparung korrespondierend zum Rückhaltebereich vorgesehen ist, wobei die Ausformungsaussparung dem Rückhaltebereich gegenüberliegend und mit einer Dimensionierung entsprechend mindestens der Fläche des Rückhaltebereichs in Projektion auf die Verschwenkebene vorgesehen ist und der Steg zumindest in Längsrichtung größere Abmessungen aufweist als der Rückhaltebereich. Dies erlaubt die Herstellung der Rückhaltebereiche mit einfachen sog. Auf/Zu-Werkzeugen in Spritzgusstechnik, da die Ausformungsaussparung das Entformen der Rückhaltebereiche aus einer solchen Spritzgussform ermöglicht.

Insgesamt kann die Leitungsführungsvorrichtung je nach für die Anwendung gewünschter Gesamtlänge mehrstückig aus mehreren in Längsrichtung verbundenen Führungsstücken zusammengesetzt werden. Hierbei können die Führungsstücke jeweils eine Anzahl Segmente umfassen und jeweils einteilig nach dem vorgenannten Ansatz hergestellt sein.

Insbesondere kann dabei jedes Führungsstück ein durch aufeinanderfolgende, einteilig verbundene Zentralbereiche und Gelenkbereiche gebildetes Tragband umfassen, insbesondere ein mit einer Hauptebene senkrecht zur Verschwenkebene und/oder in Längsrichtung erstrecktes Tragband. An beiden Längsenden des Tragbands kann dabei je einer von zwei zusammenwirkenden Verbindern vorgesehen sein, um die einzelnen Führungsstücke in Längsrichtung miteinander zu verbinden.

In einer bevorzugten Ausführung der Verbinder wird zumindest ein erster Verbinder durch den Zentralbereich eines endseitigen Segments des Führungsstücks gebildet und/oder ein zweiter Verbinder ist an einem freien Ende eines Gelenkbereiche des Führungsstücks gebildet. In weiterhin bevorzugter Ausführung der Verbinder ist vorgesehen, dass die zusammenwirkenden Verbinder zur formschlüssigen Verbindung und/oder zur kraftschlüssigen Verbindung der Tragbänder zweier aufeinanderfolgender Führungsstücke ausgeführt sind, vorzugsweise derart, dass die Verbindung ausschließlich in Richtung senkrecht zur Verschwenkebene herstellbar und/oder lösbar ist.

Besonders bevorzugt sind die Verbinder so ausgeführt, dass die Verbindung werkzeuglos herstellbar ist, bevorzugt ausschließlich in Richtung senkrecht zur Verschwenkebene.

Die zusammenwirkenden Verbinder haben bevorzugt Anlageflächen senkrecht zur Verschwenkebene, welche im verbundenen Zustand aneinander anliegen. Hierdurch kann eine stabile Verbindung im Tragstrang erzielt werden.

Weiterhin bevorzugte Ausführungsvarianten sehen eines oder mehrere der nachfolgenden Merkmale bzw. Kombinationen hieraus vor:
- jeder Längsabschnitt bzw. jedes Führungsstück umfasst eine Anzahl von mindestens drei einteiligen Segmenten, insbesondere gleicher Bauart; und/oder
- bei jedem Segment liegen die Seitenteile im Wesentlichen parallel zur Hauptebene und/oder die Stege im Wesentlichen senkrecht zur Hauptebene des Zentralbereichs; und/oder
- jedes Segment hat einen Querschnitt senkrecht zur Längsrichtung, der im Wesentlichen doppel-U-förmig bzw. UU-förmig bzw. 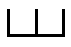 -förmig ist und/oder einen Querschnitt mit drei im Wesentlichen parallelen Schenkeln gebildet durch äußere Seitenteile und den Zentralbereich dazwischen; und/oder
- mindestens ein Längsabschnitt bzw. Führungsstück ist mit in Ruhelage vorgekrümmten Gelenkbereichen bzw. zueinander vorgeschwenkten Segmenten, dies erlaubt die Erzielung einer Vorspannung und erleichtert zudem die einteilige Herstellung im Formwerkzeug ; und/oder
- jedes Segment ist derart gestaltet, dass es eine Bewegung einer in einem Aufnahmeraum aufgenommenen Leitung in mindestens drei Richtungen senkrecht zur Hauptebene begrenzt, insbesondere in beide Richtungen senkrecht zur Hauptebene und in mindestens eine Richtung parallel zur Verschwenkebene, insbesondere vertikal nach unten.

In einer bevorzugten Ausführung sind die Gelenkbereiche plattenartig ausgeführt mit einer Hauptebene senkrecht zur Verschwenkebene sowie mit einer gegenüber den Zentralbereichen reduzierten Wandstärke. Dabei ist die Wandstärke vorzugsweise um ein Mehrfaches geringer, z.B. um das mindestens dreifache geringer, als die Längsabmessung des Gelenkbereichs in Längsrichtung und/oder um ein Mehrfaches geringer, z.B. um das mindestens dreifache geringer, als die Breitenabmessung des Gelenkbereichs senkrecht zur Verschwenkebene.

Bevorzugt wirken die mittels der Gelenkbereiche einteilig verbundenen Zentralbereiche mitsamt der Gelenkbereiche als Tragband und/oder definieren die neutrale Faser der Leitungsführungsvorrichtung.

Die Leitungsführungsvorrichtung kann vorzugsweise zur liegenden Anwendung bestimmt sein, wobei die neutrale Faser bzw. das Tragband insbesondere vertikal ausgerichtet ist. Die Leitungsführungsvorrichtung kann mit gleichbleibender Gestaltung jedoch auch in konventioneller stehender Anordnung mit einem unteren Trum und einem oberen Trum genutzt werden.

In besonders bevorzugter Ausführung ist jeder Längsabschnitt bzw. jedes Führungsstück einteilig aus Kunststoff hergestellt, insbesondere im Spritzgussverfahren. Dabei kann das Führungsstück vorzugsweise aus einem materialeinheitlichen Kunststoff, insbesondere aus einem einheitlichen Kunststoff in den Gelenkbereichen und in den weiteren Bereichen wie Stegen und Seitenteilen, ausgeführt sein.

Zur endseitigen Befestigung an der bzw. den Anschlussstellen weisen zumindest einige Zentralbereiche bevorzugt eine in der Hauptebene verlaufende Befestigungsöffnung auf, insbesondere für Befestigungsschrauben. So kann die Notwendigkeit besonderer Endanschluss-Bauteile vermieden werden, indem die Befestigungsfunktion bereits in die Führungsstücke bzw. Bauteile der Leitungsführungsvorrichtung mit integriert ist.

Die Erfindung betrifft auch für sich genommen ein einteiliges Führungsstück für eine Leitungsführungsvorrichtung zum beweglichen Führen mindestens einer Versorgungsleitung, wie zum Beispiel eines Strom- oder Datenkabels, zwischen zwei Anschlussstellen, von denen mindestens eine relativbeweglich zur anderen ist, wobei das Führungsstück mehrere Segmente umfasst, insbesondere mindestens drei Segmente umfasst, und einteilig hergestellt ist, wobei die Segmente durch eine flexible Verbindung in Längsrichtung miteinander verbunden sind, sodass die Segmente zueinander in einer Schwenkebene schwenkbar sind zwecks Bildung eines Umlenkbogens beim Bewegen der Leitungsführungsvorrichtung und wobei die Segmente mindestens einen Aufnahmeraum definieren, in den mindestens eine Versorgungsleitung eingelegt und gehalten werden kann.

Erfindungsgemäß wird vorgesehen, dass die Segmente jeweils einen Zentralbereich mit einer Hauptebene senkrecht zur Schwenkebene aufweisen, mit an einer ersten Seite der Hauptebene einem ersten Aufnahmeraum, welcher durch einen ersten Steg quer zur Hauptebene und ein von diesem Steg gehaltenes erstes Seitenteil und eine erste Hauptfläche des Zentralbereich begrenzt ist, und mit an einer gegenüberliegenden zweiten Seite der Hauptebene einem zweiten Aufnahmeraum, welcher durch einen zweiten Steg quer zur Hauptebene und ein von diesem Steg gehaltenes zweites Seitenteil und eine zweite Hauptfläche des Zentralbereichs begrenzt ist.

Weiterhin kann erfindungsgemäß jeweils der erste und zweite Steg, sowie das erste und zweite Seitenteil einteilig mit dem Zentralbereich hergestellt sein und/oder ein biegsamer Gelenkbereich einteilig mit den Zentralbereichen von je zwei in Längsrichtung aufeinanderfolgenden Segmenten hergestellt sein, um die flexible Verbindung dazwischen bereitzustellen.

Das vorgeschlagene einzelne Bauteil bzw. Führungsstück kann dementsprechend vergleichsweise einfach als Spritzgussteil aus Kunststoff hergestellt werden. Es kann ein oder mehrere weiterbildende Merkmale gemäß der vorstehenden Beschreibung bzw. nach einem der Unteransprüche 2 bis 14 aufweisen.

Die vorgeschlagene Leitungsführungsvorrichtung lässt sich aus kostengünstigen einzelnen Bauteilen bzw. Führungsstücken herstellen und mit relativ geringem Aufwand montieren.

Die vorgeschlagene Leitungsführungsvorrichtung ist insbesondere für relativ kurze Fahrwege bzw. Bewegungslängen, typisch ≤ 3m gut geeignet.

Die vorgeschlagene Leitungsführungsvorrichtung eignet sich insbesondere zur Anwendung in einem Server-Rack umfassend ein Gestell zur Montage von Halteschienen für schubladenartig ausziehbare Server, wobei die Leitungsführungsvorrichtung zur

Versorgung eines Servers vorgesehen ist, der schubladenartig ausgezogen werden kann, z.B. zu Wartungszwecken. Die Erfindung ist grundsätzlich besonders geeignet zur Leitungsführung in Anwendungen bei denen eine besonders flache Bauart der Vorrichtung vorteilhaft ist, wie z.B. bei jeglicher Art von Schubladenauszügen oder z.B. in Server-Racks.

Weitere Einzelheiten, Vorteile und Merkmale der Erfindung lassen sich der nachfolgenden Beschreibung von zwei Ausführungsbeispielen anhand der beigefügten Zeichnungen entnehmen. Dabei zeigen:
**FIG. 1****:** ein erstes Ausführungsbeispiel einer Leitungsführungsvorrichtung aus einteiligen Führungsstücken;
**FIG. 2A-2E****:** Ansichten eines einteilig hergestellten Führungsstücks als wesentliche Komponente einer Leitungsführungsvorrichtung gemäß FIG. 1, im Querschnitt (FIG. 2A, FIG. 2B: vgl. Schnittlinien A-A bzw. B-B in FIG. 2C), in Draufsicht bzw. Seitenansicht (FIG. 2C), in Untersicht bzw. Rückansicht (FIG. 2D) und in einer Perspektivansicht (FIG. 2E);
**FIG. 2F****:** eine Perspektivansicht von zwei Führungsstücken nach FIG. 2A-2E mit komplementären Verbindungsbereichen zum Verbinden der Führungsstücke; und
**FIG. 3A-3B****:** ein zweites Ausführungsbeispiel einer Leitungsführungsvorrichtung gemäß der Erfindung, hier mit einteilig hergestellten Führungsstücken (FIG. 3A), deren Segmente zueinander auch rückwärtig schwenkbar sind (vgl. FIG. 3B).

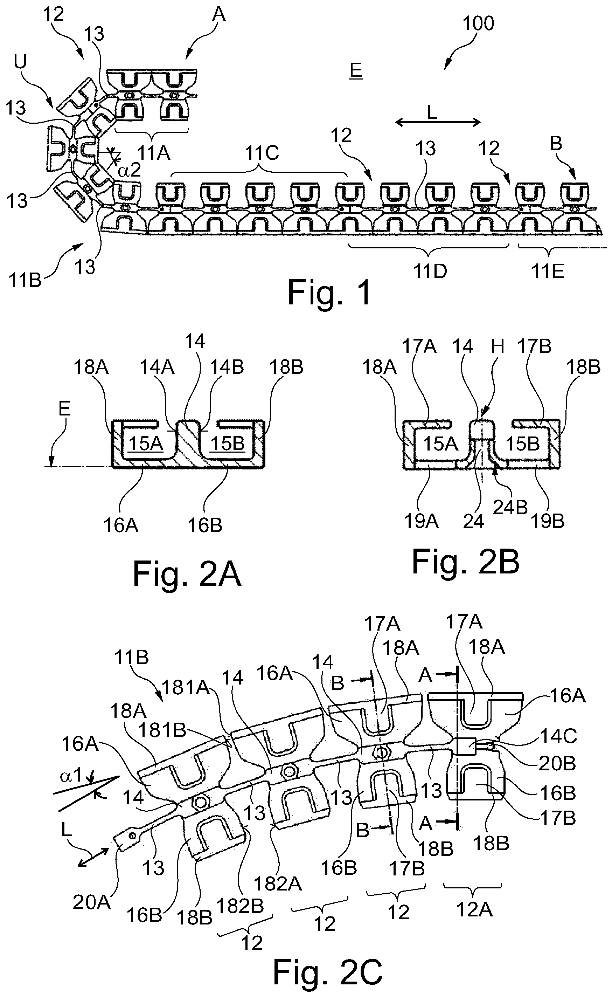

FIG. 1 zeigt in Draufsicht bzw. von oben eine in bevorzugt liegender Anwendung verwendete Leitungsführungsvorrichtung 100. Die Leitungsführungsvorrichtung 100 dient zum beweglichen bzw. dynamischen Führen mindestens einer Versorgungsleitung, wie zum Beispiel eines Strom- oder Datenkabels (nicht gezeigt), zwischen zwei Anschlussstellen A, B. Mindestens eine der Anschlussstellen A, B ist relativbeweglich zur anderen, z.B. linear in der Ebene der FIG. 1. Die Leitungsführungsvorrichtung 100 hat mehrere aufeinanderfolgende Längsabschnitte, die durch einzelne miteinander in Längsrichtung L verbundene Führungsstücke 11A...11E gebildet sind. Jedes der Führungsstücke 11A...11E ist, wie unten näher anhand von FIG. 2A-2E beschrieben, einteilig hergestellt und hat mehrere einteilige Segmente 12, 12A die in Längsrichtung L aufeinander folgen.

Die gliederartigen Segmente 12 eines Führungsstücks 11A...11E sind jeweils in Längsrichtung L durch biegsam gestaltete Gelenkbereiche 13 miteinander flexibel verbunden, d.h. zwischen den einzelnen Segmenten 12 bilden die bestimmungsgemäß elastisch biegsamen Gelenkbereiche 13 je eine flexible Verbindung. Hierdurch sind die in sich relativ biegesteif ausgeführten Segmente 12 gegeneinander in einer Schwenkebene E schwenkbar, welche in FIG. 1 der Zeichnungsebene entspricht. Bei bevorzugt liegender Anwendung ist die Schwenkebene E, in welcher die Längsrichtung L liegt, im Wesentlichen horizontal. Beim Verfahren der beweglichen Anschlussstelle A hin und her in Längsrichtung bildet die Leitungsführungsvorrichtung 100 einen Umlenkbogen U, durch welchen die Segmente 12 umgelenkt werden. Alternativ kann die Leitungsführungsvorrichtung 100 auch in einer stehenden Anwendung in einer im Wesentlichen vertikalen Schwenkebene E bzw. mit einem vertikal angeordneten Umlenkbogen U genutzt werden.

FIG. 2A-2E zeigen eines der mehreren baugleichen, einteiligen Führungsstücke 11A...11E, hier z.B. das Führungsstück 11B, im nicht abgewinkelten Ruhezustand. Hierbei sind die Gelenkbereiche 13 mit einer leichten Vorkrümmung hergestellt, sodass die einzelnen Segmente 12 in unbelasteter Ruhestellung bereits zueinander leicht abgewinkelt sind. Dies erzeugt Vorspannung und erleichtert die Herstellung der einteiligen Führungsstücke 11A...11E in einfachen Spritzgusswerkzeugen. Die Führungsstücke 11A...11E sind vorzugsweise als einteilige Spritzgussteile aus einem thermoplastischen Kunststoff, ggf. mit Verstärkungsfasern hergestellt.

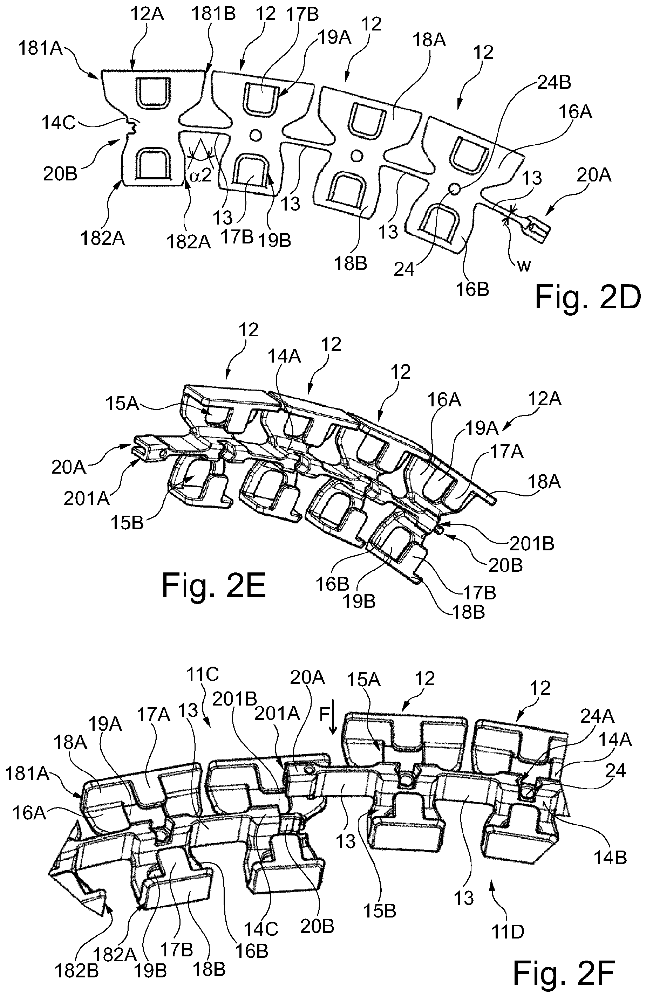

FIG. 2A bzw. FIG. 2B zeigen Querschnitte entsprechend den Schnittlinien A-A bzw. B-B in FIG. 2C, d.h. senkrecht zur Schwenkebene E bzw. Ebene der FIG. 2C.

Wie am besten aus FIG. 2A-2B ersichtlich, haben die Segmente 12 jeweils einen Zentralbereich 14 mit einer in Längsrichtung gerichteten Hauptebene H senkrecht zur Schwenkebene E und zur Zeichnungsebene aus FIG. 2A-2B. Auf einer ersten Seite der Hauptebene H bildet jedes Segment 12 einen ersten Aufnahmeraum 15A und auf einer gegenüberliegenden, zweiten Seite der Hauptebene H einen zweiten Aufnahmeraum 15B.

Der erste Aufnahmeraum 15A ist durch einen ersten Steg 16A, ein an diesem Steg 16A vorgesehenes erstes äußeres Seitenteil 18A und eine erste Hauptfläche 14A des Zentralbereichs 14 begrenzt. Der erste Steg 16A verläuft im Wesentlichen quer zur Hauptebene H bzw. parallel zur Schwenkebene E und hält das erste Seitenteil 18A am Zentralbereich 14. Das erste Seitenteil 18A ist in etwa parallel zur Hauptebene H bzw. zur Hauptfläche 14A des Zentralbereichs 14 erstreckt bzw. angeordnet. Analog hierzu ist der zweite Aufnahmeraum 15B durch einen ersten Steg 16B, ein an diesem Steg 16B vorgesehenes zweites äußeres Seitenteil 18B und eine zweite Hauptfläche 14B des Zentralbereichs 14 begrenzt. Der zweite Steg 16B verläuft ebenfalls im Wesentlichen quer zur Hauptebene H bzw. parallel zur Schwenkebene E und hält das zweite Seitenteil 18B am Zentralbereich 14. Das zweite Seitenteil 18B ist in etwa parallel zur Hauptebene H bzw. zur Hauptfläche 14B des Zentralbereichs 14 erstreckt bzw. angeordnet.

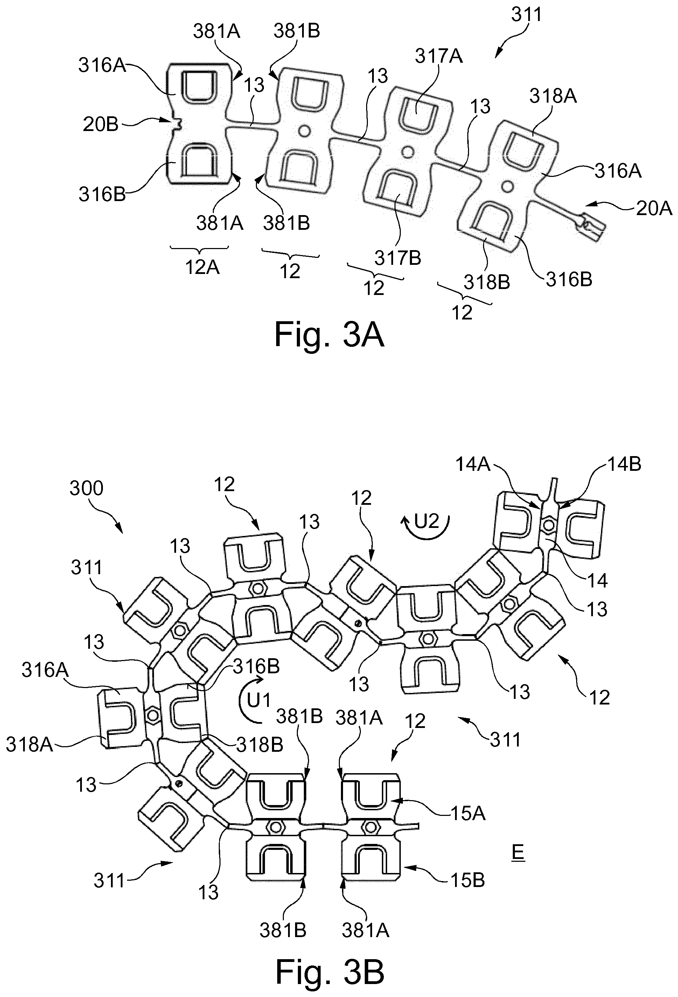

Die zweiten Seitenteile 18B sind in FIG. 2A-2F anders, insbesondere in Längsrichtung kürzer, dimensioniert als die ersten Seitenteile 18A (im Gegensatz z.B. zu FIG. 3A-3B). Die Stege 16A bzw. 16B halten die Seitenteile 18A bzw. 18B am Zentralbereich. Zugleich dienen die Stege 16A, 16B beim jeweiligen Aufnahmeraum 15A, 15B als Auflage zur Abstützung von Leitungen, je nach Anwendung nach unten bei liegender Anwendung (wie in FIG. 1) oder nach seitlich außen bei einer stehenden Anwendung. Die Seitenteile 18A bzw. 18B halten die Leitungen (nicht gezeigt) in Richtung radial nach außen bzw. nach innen in Bezug auf den Umlenkbogen U, d.h. je nach Anwendung in seitlicher Richtung oder in vertikaler Richtung im Aufnahmeraum 15A bzw. 15B.

Wie aus FIG. 2A am besten ersichtlich, sind jeweils der erste und zweite Steg 16A, 16B sowie das erste und zweite Seitenteil 18A, 18B einteilig mit dem Zentralbereich 14 hergestellt.

An jedem der Seitenteile 18A, 18B ist weiterhin jeweils ein Rückhaltebereich 17A, 17B gegenüberliegend zum Steg 16A bzw. 16B vorgesehen, der zum Zentralbereich 14 nach innen vorsteht. Die Rückhaltebereiche 17A, 17B dienen zum Halten der Leitung im jeweiligen Aufnahmeraum 15A, 15B in Richtung nach oben mit Bezug auf FIG. 2A-2B. Zwischen den im beiden bevorzugt identisch dimensionierten Rückhaltebereichen 17A, 17B und dem Zentralbereich 14 ist eine freibleibende Zugangsöffnung zum Einlegen bzw. Entnehmen von Leitungen (nicht gezeigt) in den bzw. aus dem jeweiligen Aufnahmeraum 15A bzw. 15B vorgesehen. Die identische Grundform der Rückhaltebereiche 17A, 17B ist in etwa D-förmig, mit Rundungen an der dem Zentralbereich 14 zugewandten Seite.

In jedem Steg 16A bzw. 16B ist jeweils eine Ausformungsaussparung 19A, 19B korrespondierend zum gegenüberliegenden Rückhaltebereich 17A, 17B vorgesehen. Im gezeigten Beispiel haben die Rückhaltebereiche 17A, 17B und somit die Ausformungsaussparungen an beiden Seiten bzw. jedem der Aufnahmeräume 15A, 15B eine identische Grundform, z.B. in etwa D-förmig. Die Ausformungsaussparung 19A, 19B liegt jeweils dem Rückhaltebereich 17A, 17B gegenüberliegen und hat eine Dimensionierung mit mindestens der Grundfläche des Rückhaltebereichs 17A, 17B bzw. der Projektion auf die Verschwenkebene E. Entsprechend hat der Steg 16A, 16B zumindest in Längsrichtung L, vorzugsweise auch senkrecht zur Hauptebene H, größere Abmessungen als der Rückhaltebereich 17A, 17B, wie aus der Rückansicht in FIG. 2D am besten ersichtlich. Dies vereinfacht die Formwerkzeuge, da keine Schieber für Hinterschneidungen benötigt werden. Auch jeder Rückhaltebereiche 17A bzw. 17B ist bevorzugt mit dem Rest des Segments 12 bzw. 12A über das Seitenteil 18A bzw. 18B und den Steg 16A bzw. 16B einteilig mit dem Zentralbereich 14 verbunden und hergestellt, insbesondere im Spritzgussverfahren. Alternativ könnten nachträglich montierte Rückhalteelemente oder Haltestege vorgesehen werden.

FIG. 2C zeigt weiterhin anschlagwirksame erste Stirnseiten 181A, 181B der ersten Seitenteile 18A und anschlagwirksame zweite Stirnseiten 182A, 182B der zweiten Seitenteile 18B. Zur Begrenzung des Verschwenkwinkels α1 von zwei Segmenten 12 zueinander in die Strecklage (vgl. FIG. 1, unterer Abschnitt z.B. bei Führungsstück 11D) wirken die voneinander abgewandten, in Längsrichtung weisenden und quer zur Schwenkebene E verlaufenden Stirnseiten 181A, 181B der ersten Seitenteile 18A jeweils als Anschläge zusammen. Zur Begrenzung des Verschwenkwinkels α2 von zwei Segmenten 12 zueinander in die voll ausgelenkte Richtung bzw. zur Bildung des Umlenkbogens (vgl. FIG. 1) in maximal abgewinkelter Relativlage der Segmente 12 wirken die voneinander abgewandten, in Längsrichtung weisenden und quer zur Schwenkebene E verlaufenden Stirnseiten 182A, 182B der zweiten Seitenteile 18B jeweils als Anschläge zusammen. Die Stirnseiten 182A, 182B sind in einem entsprechenden Winkel α2 zu einander schräg verlaufend angeordnet, so dass die Stirnseiten 182A, 182B im Anschlag bündig aufeinander liegen können.

Die unterschiedliche Wirkung der Anschläge in FIG. 1-2 wird bei Vergleich mit dem Ausführungsbeispiel in FIG. 3B deutlich.

Die Zentralbereiche 14 und Gelenkbereiche 13 bilden innerhalb eines jeden Führungsstücks 11A... 11E eine Art Tragband, das insbesondere mit seiner Hauptebene H senkrecht zur Verschwenkebene E erstreckt ist und in etwa die Längsrichtung L definiert. An beiden Längsenden des durch Zentralbereiche 14 und Gelenkbereiche 13 gebildeten Tragbands ist endseitig je einer von zwei zusammenwirkenden, korrespondierend gestalteten Verbindern 20A, 20B vorgesehen. Mittels der Verbinder 20A, 20B werden mehrere Führungsstücke 11A... 11E in Längsrichtung miteinander verbunden zu einer Leitungsführungsvorrichtung 100 gewünschter Länge. Bei Bedarf können endseitige Führungsstücke 11A bzw. 11E auf eine gewünschte Länge abgelängt werden, wie in FIG. 1 angedeutet.

Wie FIG. 2C-2E näher zeigen, ist je ein Gelenkbereich 13 einteilig bzw. aus einem Stück mit jedem der Zentralbereiche 14 hergestellt. Die gleichartigen Gelenkbereiche 13 sind bestimmungsgemäß in der Schwenkebene E elastisch biegsam, sodass eine flexible Verbindung von zwei in Längsrichtung L aufeinanderfolgenden Segmenten 12 erzielt wird. Die Biegsamkeit des Gelenkbereich 13 wird insbesondere durch im Vergleich zur Baulänge in Längsrichtung L bzw. Bauhöhe senkrecht zur Schwenkebene deutlich reduzierte Wandstärke des Gelenkbereichs 13 erzielt. Dabei kann die Wandstärke W z.B. bevorzugt im Bereich von ca. 5%-20%, insbesondere ca. 7,5%-15% der Baulänge und/oder Bauhöhe betragen. Die biegsamen Gelenkbereich 13 können insoweit plattenartig ausgeführt sein, wie z.B. in FIG. 2E ersichtlich, und erstrecken sich bevorzugt in Wesentlichen in der Hauptebene H (zumindest in gestrecktem Zustand).

Demgegenüber haben die Zentralbereiche 14 im Vergleich zu den Gelenkbereichen 13 eine deutlich größere Wandstärke zwischen den Hauptflächen 14A, 14B gemessen, wie in FIG. 2A ersichtlich. Diese beträgt vorzugsweise mindestens das Dreifache der Wandstärke W der Gelenkbereiche 13. Die Zentralbereiche 14 sind dadurch im Vergleich zu den Gelenkbereichen 13 relativ biegesteif und vorzugsweise torsionssteif ausgeführt, sodass beim Abwinkeln der Segmente 12 im Umlenkbogen U (FIG. 1) nur die Gelenkbereiche 13 elastisch durch Biegung verformt werden (NB: in FIG. 1 bzw. FIG. 3 sind aus technischen Gründen nicht die tatsächlichen, bogenförmigen Krümmungsverläufe der Gelenkbereiche 13 dargestellt).

Im gezeigten Beispiel aus FIG. 2A-2E hat jedes einteilige Führungsstück 11A... 11E insgesamt vier Segmente 12, 12A wobei alle Segmente im Wesentlichen baugleich dimensioniert sind, und baugleich gestaltet sind mit Ausnahme eines endseitigen Segments 12A, das einen speziell gestalten Zentralbereich 14C aufweist. Am Zentralbereich 14C dieses endseitigen Segments 12A ist ein Verbinder 20B vorgesehen, z.B. als Positivform bzw. männlicher Verbinder zur Verbindung mit einem korrespondierenden, z.B. weiblichen Verbinder 20A des nächsten Führungsstücks 11A... 11E.

In FIG. 2C-2E sind die Verbinder an den gegenüberliegenden Längsenden näher gezeigt. Der weibliche Verbinder 20A ist hier am freien Ende eines endseitig vorstehenden Gelenkbereichs 13 vorgesehen und ist konjugiert zu dem männlichen Verbinder 20B, hier am Zentralbereich 14C des anderen Endbereichs. Die Verbinder 20A, 20B sind mit komplementärer Außenkontur so gestaltet, dass diese im zusammengefügten Zustand eine geschlossene Form entsprechend der Außenkontur der anderen Zentralbereiche 14 der zueinander baugleichen Segmente 12 des Führungsstücks 11A... 11E erzeugen.

Das Fügen der Verbinder 20A, 20B zum Verbinden zweier Führungsstücke 11C, 11D erfolgt durch eine Bewegung in einer Fügerichtung F im Wesentlichen oder genau senkrecht zur Verschwenkebene E, wie in FIG. 2F näher ersichtlich. Die Verbinder 20A, 20B wirken zur formschlüssigen und kraftschlüssigen Verbindung der Tragbänder zweier aufeinanderfolgender Führungsstücke zusammen. Die Verbindung ist bevorzugt ausschließlich in Richtung senkrecht zur Verschwenkebene herstellbar, insbesondere werkzeuglos, und vorzugsweise nur mit geeignetem Werkzeug zerstörungsfrei lösbar. Wie in FIG. 2D-2F zu erkennen, bilden die Verbinder 20A, 20B jeweilige Anlageflächen 201A, 201B senkrecht zur Verschwenkebene E, welche im verbundenen Zustand fest aneinander anliegen.

Mit Ausnahme des endseitigen Segments 12A mit dem Zentralbereich 14C und Verbinder 20B haben die drei weiteren Segmente 12 in ihrem Zentralbereich eine durchgehende Befestigungsöffnung 24, wobei an der einen Mündung der Befestigungsöffnung 24 eine Vertiefung 24A mit einer Sechskantöffnung, z.B. für Sechskant-Muttern oder auch Zylinderkopfschrauben, vorgesehen ist und an der gegenüberliegenden Mündung der Befestigungsöffnung 24 eine konische Vertiefung 24B für eine Senkkopfschraube vorgesehen ist. Mittels der Befestigungsöffnung 24 und koaxialer Vertiefung 24A bzw. 24B kann jedes Segment 12 wahlweise an der Anschlussstelle A, B befestigt werden, wobei eine überschüssige Länge durch Abtrennen am Gelenkverbinder 13 entfernt werden kann.

Mit Bezug auf FIG. 3A-3B wird ein zweites Ausführungsbeispiel einer Leitungsführungsvorrichtung 300 aus mehreren einteiligen Führungsstücken 311 kurz beschrieben, wobei nur die wesentlichen Unterschiede zu FIG. 1-2 kurz erläutert seien. Jedes Führungsstück 311 hat ebenfalls mehrere Segmente mit je einem Zentralbereich 14 und einen Gelenkbereich 13 sowie beidseitig hierzu je einem Aufnahmeraum 15A, 15B. Anders als in FIG. 1 ist, wie in FIG. 3B gezeigt, das Führungsstück 311 jedoch in zwei Schwenkrichtungen bzw. entgegengesetzten Krümmungsrichtungen U1 bzw. U2 verformbar. Beim Führungsstück 311 haben die Segmente an beiden Seiten, d.h. an jedem Aufnahmeraum 15A, 15B, jeweils baugleich dimensionierte erste und zweite Stege 316A, 316B sowie baugleich dimensionierte erste und zweite Seitenteile 318A, 318B, d.h. die Stirnseiten 381A, 318B haben an beiden Seiten des Tragstrangs bzw. der Hauptfläche eine gleiche Winkelbegrenzung bzw. Anschlagwirkung. Auch eine voneinander leicht verschiedene Winkelbegrenzung ist realisierbar. Die Rückhaltebereiche 317A, 317B sind ebenfalls baugleich gestaltet. Die Leitungsführungsvorrichtung 300 kann somit auch für Anwendungen mit rückwärtiger Biegung z.B. in die entgegengesetzte Krümmungsrichtungen U2 genutzt werden. Auch das Führungsstück 311 aus FIG.3A-3B ist als einteiliges Spritzgussteil aus Kunststoff günstig herstellbar.

### Bezugszeichenliste

**FIG. 1****,** **FIG. 2A-2E**
100 Leitungsführungsvorrichtung
11A ... 11E Längsabschnitt bzw. Führungsstück
12 Segmente
13 Gelenkbereich
14 Zentralbereich
14A, 14B Hauptfläche (des Zentralbereichs 14)
15A erster Aufnahmeraum
15B zweiter Aufnahmeraum
16A erster Steg
16B zweiter Steg
17A erster Rückhaltebereich
17B zweiter Rückhaltebereich
18A erstes Seitenteil
18B zweites Seitenteil
181A, 181B erste Stirnseiten
182A, 182B zweite Stirnseiten
20A, 20B korrespondierende Verbinder
201A, 201B Anlagefläche
24 Befestigungsöffnung
24A, 24B Vertiefungen
A, B Anschlussstellen
E Schwenkebene
F Fügerichtung
H Hauptebene
L Längsrichtung
U Umlenkbogen
W Wandstärke (Gelenkbereich)
α1, α2 Verschwenkwinkel
**FIG. 3A-3B**
300 Leitungsführungsvorrichtung
311 Führungsstück
316A erster Steg
316B zweiter Steg
317A erster Rückhaltebereich
317B zweiter Rückhaltebereich
318A erstes Seitenteil
318B zweites Seitenteil
381A, 381B Stirnseiten
U1, U2 Krümmungsrichtung

## Patentansprüche

1. Leitungsführungsvorrichtung (100) zum beweglichen Führen mindestens einer Versorgungsleitung, wie zum Beispiel eines Strom- oder Datenkabels, zwischen zwei Anschlussstellen, von denen mindestens eine relativbeweglich zur anderen ist, wobei zumindest ein Längsabschnitt (11A... 11E) der Leitungsführungsvorrichtung mehrere Segmente (12) umfasst und einteilig hergestellt ist,
wobei die Segmente (12) durch eine flexible Verbindung (14) in Längsrichtung (L) miteinander verbunden sind, sodass die Segmente zueinander in einer Schwenkebene (E) schwenkbar sind zwecks Bildung eines Umlenkbogens (U) beim Bewegen der Leitungsführungsvorrichtung;
wobei die Segmente (12) mindestens einen Aufnahmeraum definieren, in den mindestens eine Versorgungsleitung eingelegt und gehalten werden kann, wobei
die Segmente (12) jeweils einen Zentralbereich (14) mit einer Hauptebene (H) senkrecht zur Schwenkebene (E) aufweisen, mit auf einer ersten Seite der Hauptebene einem ersten Aufnahmeraum (15A), welcher durch einen ersten Steg (16A) quer zur Hauptebene und ein von diesem Steg (16A) gehaltenes erstes Seitenteil (18A) und eine erste Hauptfläche (14A) des Zentralbereich begrenzt ist, und mit auf einer gegenüberliegenden zweiten Seite der Hauptebene (H) einem zweiten Aufnahmeraum (15B), welcher durch einen zweiten Steg (16B) quer zur Hauptebene und ein von diesem Steg (16B) gehaltenes zweites Seitenteil (18B) und eine zweite Hauptfläche (14B) des Zentralbereichs begrenzt ist,
wobei jeweils der erste und zweite Steg (16A, 16B) sowie das erste und zweite Seitenteil (18A, 18B) einteilig mit dem Zentralbereich (14) hergestellt sind,
wobei jeweils dem ersten und dem zweiten Steg eine Einführöffnung gegenüberliegt zum Einlegen bzw. Entnehmen von Versorgungsleitungen und
wobei ein biegsamer Gelenkbereich (13) einteilig mit den Zentralbereichen (14) von je zwei in Längsrichtung aufeinanderfolgenden Segmenten (12) hergestellt ist, um die flexible Verbindung dazwischen bereitzustellen;
**dadurch gekennzeichnet, dass**
an mindestens einem der Seitenteile (18A, 18B) ein Rückhaltebereich (17A, 17B) zum Halten der Leitung im jeweiligen Aufnahmeraum vorgesehen ist.

2. Leitungsführungsvorrichtung nach Anspruch 1, **dadurch gekennzeichnet, dass**
voneinander abgewandte, in Längsrichtung weisende und/oder quer zur Schwenkebene verlaufende Stirnseiten (181A, 181B; 182A, 182B) von zumindest einem der ersten und zweiten Seitenteile (18A, 18B) jeweils als Anschläge zur Begrenzung des Verschwenkwinkels (α) von zwei Segmenten (12) zueinander zusammenwirken.

3. Leitungsführungsvorrichtung nach Anspruch 2, **dadurch gekennzeichnet, dass**
entsprechende erste Stirnseiten (181A, 181B) der ersten Seitenteile den Verschwenkwinkel (α1) in Strecklage begrenzen und/oder entsprechende zweite Stirnseiten (182A, 182B) der zweiten Seitenteile den Verschwenkwinkel (α2) in maximal abgewinkelter Relativlage bei Bildung des Umlenkbogens (U) begrenzen, wobei bevorzugt die ersten und zweiten Seitenteile (18A, 18B) in Längsrichtung (L) unterschiedliche Längen aufweisen.

4. Leitungsführungsvorrichtung nach einem der vorstehenden Ansprüche, **dadurch gekennzeichnet, dass** der Rückhaltebereich (17A, 17B) gegenüberliegend zum Steg und zum Zentralbereich vorstehend angeordnet ist.

5. Leitungsführungsvorrichtung nach Anspruch 4, **dadurch gekennzeichnet, dass** der Rückhaltebereich (17A, 18B) einteilig mit dem Seitenteil, insbesondere einteilig mit dem Seitenteil, Steg und Zentralbereich, hergestellt ist, und im Steg eine Ausformungsaussparung (19A, 19B) korrespondierend zum Rückhaltebereich vorgesehen ist.

6. Leitungsführungsvorrichtung nach einem der vorstehenden Ansprüche, **dadurch gekennzeichnet, dass**
die Leitungsführungsvorrichtung (100; 300) mehrstückig aus mehreren in Längsrichtung verbundenen Führungsstücken (11A... 11E; 311) zusammengesetzt ist, wobei die Führungsstücke (11A... 11E) jeweils eine Anzahl Segmente (12) umfassen und jeweils einteilig hergestellt sind und jedes Führungsstück (11A... 11E) ein durch aufeinanderfolgende einteilig verbundene Zentralbereiche (14) und Gelenkbereiche (13) gebildetes Tragband, insbesondere ein mit einer Hauptebene senkrecht zur Verschwenkebene und/oder in Längsrichtung erstrecktes Tragband, umfasst, wobei an beiden Längsenden des Tragbands je einer von zwei zusammenwirkenden Verbindern (20A, 20B) vorgesehen ist; vorzugsweise wobei zumindest ein Verbinder (20B) durch den Zentralbereich eines endseitigen Segments des Führungsstücks gebildet ist und/oder ein Verbinder (20A) an einem freien Ende eines Gelenkbereichs des Führungsstücks gebildet ist.

7. Leitungsführungsvorrichtung nach Anspruch 6, **dadurch gekennzeichnet,**
- **dass** die zusammenwirkenden Verbinder (20A, 20B) zur formschlüssigen und/oder kraftschlüssigen Verbindung der Tragbänder zweier aufeinanderfolgender Führungsstücke (11A-11B ... 11D-11E) ausgeführt sind, vorzugsweise derart, dass die Verbindung ausschließlich in Richtung senkrecht zur Verschwenkebene (E) herstellbar und/oder lösbar ist und insbesondere werkzeuglos herstellbar ist; und/oder
- **dass** die zusammenwirkenden Verbinder (20A, 20B) Anlageflächen (201A, 201B) senkrecht zur Verschwenkebene aufweisen, welche im verbundenen Zustand aneinander anliegen.

8. Leitungsführungsvorrichtung nach einem der vorstehenden Ansprüche, **dadurch gekennzeichnet, dass**
- jeder Längsabschnitt bzw. jedes Führungsstück (11A... 11E; 311) eine Anzahl von mindestens drei einteiligen Segmenten (12), insbesondere gleicher Bauart, umfasst; und/oder
- bei jedem Segment (12) die Seitenteile im Wesentlichen parallel zur Hauptebene (H) und/oder die Stege im Wesentlichen senkrecht zur Hauptebene (H) des Zentralbereichs (14) liegen; und/oder
- jedes Segment (12) einen Querschnitt senkrecht zur Längsrichtung hat, der im Wesentlichen doppel-U-förmig bzw. UU-förmig bzw. 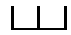 -förmig ist, mit drei im Wesentlichen parallelen Schenkeln gebildet durch äußere Seitenteile und den Zentralbereich dazwischen; und/oder
- mindestens ein Längsabschnitt bzw. Führungsstück (11A... 11E) mit in Ruhelage vorgekrümmten Gelenkbereichen (13) bzw. zueinander vorgeschwenkten Segmenten zwecks Erzielung einer Vorspannung ausgeführt ist; und/oder
- jedes Segment (12) derart gestaltet ist, dass es eine Bewegung einer in einem Aufnahmeraum (15A, 15B) aufgenommenen Leitung in mindestens drei Richtungen senkrecht zur Hauptebene (H) begrenzt.

9. Leitungsführungsvorrichtung nach einem der vorstehenden Ansprüche, **dadurch gekennzeichnet,**
- **dass** die Gelenkbereiche (13) plattenartig ausgeführt sind mit einer Hauptebene (H) senkrecht zur Verschwenkebene (E) mit einer gegenüber den Zentralbereichen (14) reduzierten Wandstärke, wobei die Wandstärke (W) vorzugsweise um ein Mehrfaches geringer ist als die Längsabmessung des Gelenkbereichs (13) in Längsrichtung (L) und um ein Mehrfaches geringer ist als die Breitenabmessung des Gelenkbereichs (13) senkrecht zur Verschwenkebene; und/oder
- **dass** die Gelenkbereiche und damit einteilig verbundene Zentralbereiche als Tragband wirken und die neutrale Faser der Leitungsführungsvorrichtung definieren, wobei die Leitungsführungsvorrichtung vorzugsweise zur liegenden Anwendung mit vertikal ausgerichteter, neutraler Faser bestimmt ist.

10. Leitungsführungsvorrichtung nach einem der vorstehenden Ansprüche, **dadurch gekennzeichnet, dass** jeder Längsabschnitt bzw. jedes Führungsstück einteilig aus Kunststoff hergestellt ist, insbesondere im Spritzgussverfahren hergestellt ist, vorzugsweise aus einem materialeinheitlichen Kunststoff.

11. Leitungsführungsvorrichtung nach einem der vorstehenden Ansprüche, **dadurch gekennzeichnet, dass** zumindest einige Zentralbereiche (14) eine in der Hauptebene (H) verlaufende Befestigungsöffnung (24) aufweisen.

12. Einteiliges Führungsstück (11A... 11E; 311) für eine Leitungsführungsvorrichtung zum beweglichen Führen mindestens einer Versorgungsleitung, wie zum Beispiel eines Strom- oder Datenkabels, zwischen zwei Anschlussstellen (A, B) von denen mindestens eine relativbeweglich zur anderen ist,
wobei das Führungsstück mehrere Segmente (12) umfasst, insbesondere mindestens drei Segmente (12) umfasst, und einteilig hergestellt ist, wobei die Segmente durch eine flexible Verbindung (13) in Längsrichtung miteinander verbunden sind, sodass die Segmente zueinander in einer Schwenkebene schwenkbar sind zwecks Bildung eines Umlenkbogens beim Bewegen der Leitungsführungsvorrichtung;
wobei die Segmente (12) mindestens einen Aufnahmeraum definieren, in den mindestens eine Versorgungsleitung eingelegt und gehalten werden kann, wobei
die Segmente jeweils einen Zentralbereich (14) mit einer Hauptebene (H) senkrecht zur Schwenkebene (E) aufweisen, mit an einer ersten Seite der Hauptebene einem ersten Aufnahmeraum (15A), welcher durch einen ersten Steg (16A; 316A) quer zur Hauptebene und ein von diesem Steg gehaltenes erstes Seitenteil (18A; 318A) und eine erste Hauptfläche (14A) des Zentralbereichs (14) begrenzt ist, und mit an einer gegenüberliegenden zweiten Seite der Hauptebene einem zweiten Aufnahmeraum (15B), welcher durch einen zweiten Steg (16B; 316B) quer zur Hauptebene und ein von diesem Steg gehaltenes zweites Seitenteil (18B; 318B) und eine zweite Hauptfläche (14B) des Zentralbereichs (14) begrenzt ist,
wobei jeweils der erste und zweite Steg (16A; 316A, 16B, 316B), sowie das erste und zweite Seitenteil (18A; 318A, 18B; 318B) einteilig mit dem Zentralbereich (14) hergestellt sind,
wobei jeweils dem ersten und dem zweiten Steg eine Einführöffnung gegenüberliegt zum Einlegen bzw. Entnehmen von Versorgungsleitungen, und
wobei ein biegsamer Gelenkbereich (13) einteilig mit den Zentralbereichen (14) von je zwei in Längsrichtung aufeinanderfolgenden Segmenten (12) hergestellt ist, um die flexible Verbindung dazwischen bereitzustellen;
**dadurch gekennzeichnet, dass**
an mindestens einem der Seitenteile (18A, 18B) ein Rückhaltebereich (17A, 17B) zum Halten der Leitung im jeweiligen Aufnahmeraum vorgesehen ist.

13. Führungsstück nach Anspruch 12, **gekennzeichnet durch** die kennzeichnenden Merkmale nach einem der Ansprüche 2 bis 11.

14. Leitungsführungsvorrichtung nach einem der Ansprüche 1 bis 11 bzw. Führungsstück nach Anspruch 12 oder 13, **dadurch gekennzeichnet, dass** die Einführöffnung zum Einlegen bzw. Entnehmen von Versorgungsleitungen in Richtung quer zur Schwenkebene (E) ausgeführt ist.

15. Server-Rack umfassend ein Gestell zur Montage von Halteschienen für schubladenartig ausziehbare Server und mindestens eine Leitungsführungsvorrichtung nach einem der vorstehenden Ansprüche 1 bis 11 zur Versorgung eines Servers.

## Claims

1. A line guiding device (100) for movably guiding at least one supply line, for example an electrical or data cable, between two connection points, at least one of which is movable relative to the other, wherein at least one longitudinal portion (11A... 11E) of the line guiding device comprises a plurality of segments (12) and is manufactured in one piece,
wherein the segments (12) are connected to each other in a longitudinal direction (L) by a flexible connection (14), such that the segments are pivotable relative to one another in a pivoting plane (E) for the purposes of forming a deflecting bend (U) during movement of the line guiding device;
wherein the segments (12) define at least one receiving space in which at least one supply line can be placed and held, wherein the segments (12) each have a central region (14) having a main plane (H) perpendicular to the pivoting plane (E), having on a first side of the main plane a first receiving space (15A) which is delimited by a first connecting piece (16A) transverse to the main plane and by a first side part (18A) held on said connecting piece (16A) and by a first main surface (14A) of the central region, and having on an opposite, second side of the main plane (H) a second receiving space (15B) which is delimited by a second connecting piece (16B) transverse to the main plane and by a second side part (18B) held on said connecting piece (16B) and by a second main surface (14B) of the central region,
wherein the first and the second connecting piece (16A, 16B) and the first and the second side part (18A, 18B) are each manufactured in one piece with the central region (14),
wherein, opposite the first and the second connecting piece, there is in each case one insertion opening for the insertion and removal of supply lines, and
wherein a flexible joint region (13) is manufactured in one piece with the central regions (14) of in each case two longitudinally successive segments (12) in order to provide the flexible connection between said segments;
**characterized in that**, on at least one of the side parts (18A, 18B), a retaining region (17A, 17B) is provided for holding the line in the respected receiving space.

2. The line guiding device as claimed in claim 1, **characterized in that**
mutually averted end faces (181A, 181B; 182A, 182B), which face in the longitudinal direction and/or extend transversely to the pivoting plane, of at least one of the first and second side parts (18A, 18B) interact as stops for limiting the pivot angle (α) of two segments (12) relative to one another.

3. The line guiding device as claimed in claim 2, **characterized in that**
corresponding first end faces (181A, 181B) of the first side parts limit the pivot angle (α1) in a straightened position, and/or corresponding second end faces (182A, 182B) of the second side parts limit the pivot angle (α2) in a maximally angled relative position when forming the deflecting bend (U), wherein, preferably, the first and second side parts (18A, 18B) have different lengths in the longitudinal direction (L).

4. The line guiding device as claimed in any one of the preceding claims, **characterized in that** the retaining region (17A, 17B) is arranged opposite the connecting piece and so as to project toward the central region.

5. The line guiding device as claimed in claim 4,
**characterized in that** the retaining region (17A, 18B) is manufactured as a single part with the side part, in particular as a single part with the side part, connecting piece and central region, and a demolding aperture (19A, 19B) is provided, correspondingly to the retaining region, in the connecting piece.

6. The line guiding device as claimed in any one of the preceding claims, **characterized in that**
the line guiding device (100; 300) is a multi-part line guiding device which is assembled from a plurality of guide pieces (11A... 11E; 311) that are connected in the longitudinal direction, wherein the guide pieces (11A... 11E) each comprise a number of segments (12) and are each manufactured in one piece, and each guide piece (11A... 11E) comprises a supporting band formed from connected in one piece successive central regions (14) and joint regions (13), in particular a supporting band extending with a main plane perpendicular to the pivoting plane and/or extending in the longitudinal direction, wherein one of two interacting connectors (20A, 20B) is provided at each of the two longitudinal ends of the supporting band; preferably wherein
at least one connector (20B) is formed by the central region of an end segment of the guide piece, and/or one connector (20A) is formed at a free end of a joint region of the guide piece.

7. The line guiding device as claimed in claim 6, **characterized**
- **in that** the interacting connectors (20A, 20B) are designed for form-fittingly and/or force-fittingly connecting the supporting bands of two successive guide pieces (11A-11B ... 11D-11E), preferably such that the connection is establishable and/or releasable exclusively in a direction perpendicular to the pivoting plane (E), and in particular is establishable without the use of tools; and/or
- **in that** the interacting connectors (20A, 20B) have abutment surfaces (201A, 201B) which are perpendicular to the pivoting plane and which lie against one another in the connected state.

8. The line guiding device as claimed in any one of the preceding claims, **characterized in that**
- each longitudinal portion or each guide piece (11A... 11E; 311) comprises a number of at least three one-piece segments (12), in particular of identical design; and/or
- in each segment (12), the side parts are substantially parallel to the main plane (H) and/or the connecting pieces are substantially perpendicular to the main plane (H) of the central region (14); and/or
- each segment (12) has a cross section perpendicularly to the longitudinal direction which is substantially double-U-shaped or UU-shaped or 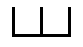 -shaped, having three substantially parallel limbs formed by outer side parts and the central region in between; and/or
- at least one longitudinal portion or guide piece (11A... 11E) is formed with joint regions (13) that are precurved in a rest position, or segments that are prepivoted relative to one another, for the purposes of achieving a preload; and/or
- each segment (12) is designed to limit a movement of a line, which is received in a receiving space (15A, 15B), in at least three directions perpendicular to the main plane (H).

9. The line guiding device as claimed in any one of the preceding claims, **characterized**
- **in that** the joint regions (13) are of plate-like design having a main plane (H) perpendicular to the pivoting plane (E) and having a reduced wall thickness in relation to the central regions (14), wherein the wall thickness (W) is preferably several times smaller than the longitudinal dimension of the joint region (13) in the longitudinal direction (L) and several times smaller than the width dimension of the joint region (13) perpendicular to the pivoting plane; and/or
- **in that** the joint regions and central regions connected thereto in one-piece act as a supporting band and define the neutral axis of the line guiding device, wherein the line guiding device is preferably designed to be used in a lying configuration with a vertically oriented neutral axis.

10. The line guiding device as claimed in any one of the preceding claims, **characterized in that** each longitudinal portion or each guide piece is manufactured in one piece from plastics material, in particular by injection molding, preferably from a materially uniform plastics material.

11. The line guiding device as claimed in any one of the preceding claims, **characterized in that** at least some central regions (14) have a fastening opening (24) extending in the main plane (H).

12. A one-piece guide piece (11A... 11E; 311) for a line guiding device for movably guiding at least one supply line, for example an electrical or data cable, between two connection points (A, B), at least one of which is movable relative to the other,
wherein the guide piece comprises a plurality of segments (12), in particular at least three segments (12), and is manufactured in one piece, wherein the segments are connected to each other in a longitudinal direction by a flexible connection (13), such that the segments are pivotable relative to one another in a pivoting plane for the purposes of forming a deflecting bend during movement of the line guiding device;
wherein the segments (12) define at least one receiving space in which at least one supply line can be placed and held**,** wherein the segments each have a central region (14) having a main plane (H) perpendicular to the pivoting plane (E), having on a first side of the main plane a first receiving space (15A) which is delimited by a first connecting piece (16A; 316A) transverse to the main plane and by a first side part (18A; 318A) held on said connecting piece and by a first main surface (14A) of the central region (14), and having on an opposite, second side of the main plane a second receiving space (15B) which is delimited by a second connecting piece (16B; 316B) transverse to the main plane and by a second side part (18B; 318B) held on said connecting piece and by a second main surface (14B) of the central region (14),
wherein the first and the second connecting piece (16A; 316A, 16B, 316B) and the first and the second side part (18A; 318A, 18B; 318B) are each manufactured in one piece with the central region (14),
wherein, opposite the first and the second connecting piece, there is in each case one insertion opening for the insertion and removal of supply lines, and
wherein a flexible joint region (13) is manufactured in one piece with the central regions (14) of in each case two longitudinally successive segments (12) in order to provide the flexible connection between said segments;
**characterized in that**, on at least one of the side parts (18A, 18B), a retaining region (17A, 17B) is provided for holding the line in the associated receiving space.

13. The guide piece as claimed in claim 12, **characterized by** the characterizing features as claimed in any one of claims 2 to 11.

14. The line guiding device as claimed in any one of claims 1 to 11 or guide piece as claimed in claim 12 or 13, **characterized in that** the insertion opening is designed for the insertion and removal of supply lines in a direction transverse to the pivoting plane (E).

15. A server rack comprising a frame for the installation of holding rails for servers that can be pulled out in the manner of drawers, and comprising at least one line guiding device as claimed in any one of the preceding claims 1 to 11 for providing a supply to a server.

## Revendications

1. Dispositif de guidage de câbles (100) destiné à guider de manière mobile au moins un câble d'alimentation, tel qu'un câble électrique ou un câble de données, entre deux points de raccordement dont au moins l'un est mobile par rapport à l'autre, au moins une section longitudinale (11A...11E) du dispositif de guidage de câble comprenant plusieurs segments (12) et étant réalisée d'un seul tenant,
les segments (12) étant reliés entre eux dans la direction longitudinale (L) par une liaison flexible (14), de sorte que les segments peuvent pivoter les uns par rapport aux autres dans un plan de pivotement (E) afin de former un coude de renvoi (U) lors du déplacement du dispositif de guidage de câble;
les segments (12) définissant au moins un espace de logement dans lequel au moins un câble d'alimentation peut être inséré et maintenu,
les segments (12) présentant chacun une zone centrale (14) avec un plan principal (H) perpendiculaire au plan de pivotement (E), avec, sur un premier côté du plan principal, un premier espace de logement (15A), délimité par une première nervure (16A) transversalement au plan principal et une première partie latérale (18A) maintenue par cette nervure (16A) et une première surface principale (14A) de la zone centrale, et avec, sur un deuxième côté opposé du plan principal (H), un deuxième espace de logement (15B), délimité par une deuxième nervure (16B) transversalement au plan principal et une deuxième partie latérale (18B) maintenue par cette nervure (16B) et une deuxième surface principale (14B) de la zone centrale, les première et deuxième nervures (16A, 16B) ainsi que les première et deuxième parties latérales (18A, 18B) étant réalisées d'un seul tenant avec la zone centrale (14), une ouverture d'insertion étant située en face respectivement de la première et de la deuxième nervure pour l'insertion ou le retrait de câbles d'alimentation, et une zone d'articulation flexible (13) étant réalisée d'un seul tenant avec les zones centrales (14) à partir de deux segments (12) successifs dans le sens longitudinal, afin de fournir la liaison flexible entre celles-ci;
**caractérisé en ce**
**qu'**une zone de retenue (17A, 17B) est prévue sur au moins l'une des parties latérales (18A, 18B) pour maintenir le câble dans l'espace de logement correspondant.

2. Dispositif de guidage de câbles selon la revendication 1,
**caractérisé en ce que**
des faces frontales (181A, 181B; 182A, 182B), orientées dans le sens longitudinal et/ou s'étendant transversalement au plan de pivotement, d'au moins l'une des première et deuxième parties latérales (18A, 18B) coopèrent respectivement en tant que butées pour limiter l'angle de pivotement (α) entre deux segments (12).

3. Dispositif de guidage de câbles selon la revendication 2,
**caractérisé en ce que**
des premières faces frontales correspondantes (181A, 181B) des premières parties latérales limitent l'angle de pivotement (α1) en position d'extension et/ou les deuxièmes faces frontales correspondantes (182A, 182B) des deuxièmes parties latérales limitent l'angle de pivotement (α2) dans la position relative d'angle maximal lors de la formation du coude de renvoi (U), les premières et deuxièmes parties latérales (18A, 18B) présentant de préférence des longueurs différentes dans la direction longitudinale (L).

4. Dispositif de guidage de câbles selon l'une quelconque des revendications précédentes, **caractérisé en ce que** la zone de retenue (17A, 17B) est disposée en saillie à l'opposé de la nervure et de la zone centrale.

5. Dispositif de guidage de câbles selon la revendication 4, **caractérisé en ce que** la zone de retenue (17A, 18B) est réalisée d'un seul tenant avec la partie latérale, en particulier d'un seul tenant avec la partie latérale, la nervure et la zone centrale, et **en ce qu'**un évidement de moulage (19A, 19B) est prévu dans la traverse de manière correspondante à la zone de retenue.

6. Dispositif de guidage de câbles selon l'une quelconque des revendications précédentes, **caractérisé en ce que** le dispositif de guidage de câbles (100; 300) est composé de plusieurs pièces de guidage (11A...11E; 311) reliées entre eux dans le sens longitudinal, les pièces de guidage (11A...11E) comprenant chacune un certain nombre de segments (12) chacun fabriqué d'un seul tenant, et chaque pièce de guidage (11A...11E) comprend une bande de support formée par des zones centrales (14) et des zones d'articulation (13) successives reliées d'un seul tenant, en particulier une bande de support s'étendant avec un plan principal perpendiculairement au plan de pivotement et/ou dans le sens longitudinal, un des deux connecteurs coopérants (20A, 20B) étant prévu aux deux extrémités longitudinales de la bande de support; de préférence, au moins un connecteur (20B) étant formé par la zone centrale d'un segment d'extrémité de la pièce de guidage et/ou un connecteur (20A) étant formé à une extrémité libre d'une zone d'articulation de la pièce de guidage.

7. Dispositif de guidage de câbles selon la revendication 6, **caractérisé en ce que**
- les connecteurs coopérants (20A, 20B) sont conçus pour la liaison par complémentarité de forme et/ou par adhérence des bandes de support de deux pièces de guidage successives (11A-11B...11D-11E), de préférence de telle sorte que la liaison puisse être établie et/ou détachée exclusivement dans une direction perpendiculaire au plan de pivotement (E) et, en particulier, sans outil; et/ou
- les connecteurs coopérants (20A, 20B) présentent des surfaces d'appui (201A, 201B) perpendiculaires au plan de pivotement, lesquelles sont en contact l'une avec l'autre à l'état connecté.

8. Dispositif de guidage de câbles selon l'une quelconque des revendications précédentes, **caractérisé en ce que**
- chaque section longitudinale ou chaque pièce de guidage (11A...11E; 311) comprend un nombre d'au moins trois segments monoblocs (12), notamment de même conception; et/ou
- pour chaque segment (12), les parties latérales sont sensiblement parallèles au plan principal (H) et/ou les nervures sont sensiblement perpendiculaires au plan principal (H) de la zone centrale (14); et/ou
- chaque segment (12) présente une section transversale perpendiculaire à la direction longitudinale qui est essentiellement en forme de double U ou en forme de UU ou en forme de 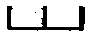 avec trois branches essentiellement parallèles formées par les parties latérales extérieures et la zone centrale située entre celles-ci; et/ou
- au moins une section longitudinale ou pièce de guidage (11A...11E) est réalisée avec des zones d'articulation (13) pré-courbées en position de repos ou des segments prépivotés les uns par rapport aux autres afin d'obtenir une précontrainte; et/ou
- chaque segment (12) est conçu de telle sorte qu'il limite le mouvement d'un câble logé dans un espace de logement (15A, 15B) dans au moins trois directions perpendiculaires au plan principal (H).

9. Dispositif de guidage de câbles selon l'une quelconque des revendications précédentes, **caractérisé en ce que**
- les zones d'articulation (13) sont réalisées sous forme de plaques présentant un plan principal (H) perpendiculaire au plan de pivotement (E) et dont l'épaisseur de paroi est réduite par rapport aux zones centrales (14), l'épaisseur de paroi (W) étant de préférence inférieure d'un multiple à la dimension longitudinale de la zone d'articulation (13) dans la direction longitudinale (L) et est inférieure d'un multiple à la dimension en largeur de la zone d'articulation (13) perpendiculairement au plan de pivotement; et/ou
- les zones d'articulation et les zones centrales qui y sont reliées d'un seul tenant agissent comme une bande de support et définissent la fibre neutre du dispositif de guidage de câble, le dispositif de guidage de câble étant de préférence destiné à une utilisation à l'horizontale avec une fibre neutre orientée verticalement.

10. Dispositif de guidage de câbles selon l'une quelconque des revendications précédentes, **caractérisé en ce que** chaque section longitudinale ou chaque pièce de guidage est fabriqué d'un seul tenant en matière plastique, en particulier par moulage par injection, de préférence à partir d'un matériau plastique uniforme.

11. Dispositif de guidage de câbles selon l'une quelconque des revendications précédentes, **caractérisé en ce qu'**au moins certaines zones centrales (14) présentent une ouverture de fixation (24) s'étendant dans le plan principal (H).

12. Pièce de guidage monobloc (11A...11E; 311) pour un dispositif de guidage de câbles destiné à guider de manière mobile au moins un câble d'alimentation, tel qu'un câble électrique ou un câble de données, entre deux points de raccordement (A, B) dont au moins l'un est mobile par rapport à l'autre,
la pièce de guidage comprenant plusieurs segments (12), en particulier au moins trois segments (12), et est fabriqué d'un seul tenant, les segments étant reliés entre eux dans le sens longitudinal par une liaison flexible (13), de sorte que les segments peuvent pivoter les uns par rapport aux autres dans un plan de pivotement afin de former un coude de renvoi lors du déplacement du dispositif de guidage de câble;
les segments (12) définissant au moins un espace de logement dans lequel au moins une conduite d'alimentation peut être insérée et maintenue,
les segments présentant chacun une zone centrale (14) avec un plan principal (H) perpendiculaire au plan de pivotement (E), avec, sur un premier côté du plan principal, un premier espace de logement (15A), délimité par une première nervure (16A; 316A) transversalement au plan principal et une première partie latérale (18A; 318A) et une première surface principale (14A) de la zone centrale (14), et avec, sur un deuxième côté opposé du plan principal, un deuxième espace de logement (15B) délimité par une deuxième nervure (16B; 316B) perpendiculairement au plan principal et une deuxième partie latérale (18B; 318B) et une deuxième surface principale (14B) de la zone centrale (14),
les première et deuxième nervures (16A; 316A, 16B, 316B) ainsi que les première et deuxième parties latérales (18A;
318A, 18B; 318B) étant réalisées d'un seul tenant avec la zone centrale (14),
une ouverture d'insertion étant située en face respectivement de la première et de la deuxième nervure pour l'insertion ou le retrait de câbles d'alimentation, et une zone d'articulation flexible (13) étant réalisée d'un seul tenant avec les zones centrales (14) à partir de deux segments (12) successifs dans le sens longitudinal, afin de fournir la liaison flexible entre celles-ci;
**caractérisé en ce**
**qu'**une zone de retenue (17A, 17B) est prévue sur au moins l'une des parties latérales (18A, 18B) pour maintenir le câble dans l'espace de logement correspondant.

13. Pièce de guidage selon la revendication 12, **caractérisée par** les caractéristiques distinctives selon l'une des revendications 2 à 11.

14. Dispositif de guidage de câbles selon l'une quelconque des revendications 1 à 11 ou pièce de guidage selon la revendication 12 ou 13, **caractérisé en ce que** l'ouverture d'insertion destinée à l'insertion ou au retrait de câbles d'alimentation est orientée transversalement par rapport au plan de pivotement (E).

15. Rack de serveurs comprenant un châssis destiné au montage de rails de fixation pour des serveurs extractibles à la manière de tiroirs et au moins un dispositif de guidage de câble selon l'une des revendications 1 à 11 ci-dessus pour l'alimentation d'un serveur.
